# EUROPEAN PATENT SPECIFICATION

(11) **EP 1 671 034 B1**
(45) Date of publication and mention of the grant of the patent: **12.12.2007**
(21) Application number: 04773751.5
(22) Date of filing: 08.10.2004
(51) Int. Cl.: F04B 39/00

(54) **HERMETIC COMPRESSOR HAVING A FOAM-MOLDED SUCTION MUFFLER**
HERMETISCHER VERDICHTER MIT EINEM GESCHÄUMTEN SAUGSCHALLDÄMPFER
COMPRESSEUR HERMETIQUE AYANT UN SILENCIEUX D'ASPIRATION FABRIQUE EN MOUSSE PLASTIQUE

(30) Priority: 10.10.2003 JP 2003352032; 21.04.2004 JP 2004125232
(43) Date of publication of application: 21.06.2006
(73) Proprietor: MATSUSHITA ELECTRIC INDUSTRIAL CO., LTD, Kadoma-shi, Osaka 571-8501 (JP)
(72) Inventor: NAKANO, Akira Matsushita Electrical Ind. Co.,Ltd., Osaka 540-6319 (US); INAGAKI, Ko Matsushita Electrical Ind. Co.,Ltd., Osaka 540-6319 (US)
(74) Representative: Jackson, Martin Peter
(86) International application number: PCT/JP2004/015300
(87) International publication number: WO 2005/035983

(56) References cited:
- EP-A- 1 172 548
- EP-A- 1 266 928
- EP-A- 1 347 175
- DE-A1- 10 323 527
- US-A- 4 531 894
- US-A- 5 304 044

## Description

### TECHNICAL FIELD

The present invention relates to a hermetic compressor for use in a refrigerator, an air conditioner, a freezing refrigerating apparatus or the like, and more particularly relates to its suction muffler and an improvement of its manufacturing method.

### BACKGROUND ART

In recent years, a hermetic compressor used in a freezing refrigerating apparatus or the like strongly desires that energy efficiency is high, in addition to a fact that the noise caused by an operation is low.

As a conventional hermetic compressor, there is a hermetic compressor whose energy efficiency is improved by improving the sound attenuation effect of a suction muffler and effectively using the sound attenuation effect and consequently increasing the refrigerant circulation quantity into a compression chamber (for example, refer to the following patent document 1).

Also, there is a hermetic compressor whose energy efficiency is improved by maintaining the refrigerant gas, which is returned from a freezing cycle, at the state of a low temperature and high density and sucking into the compression room (for example, refer to the following patent document 2). Patent Document 1: Laid-open Unexamined Patent Publication No. 2003-42064 Patent Document 2: Laid-open Unexamined Patent Publication No. 11-303739

The configuration of the above-mentioned conventional hermetic compressor will be described below with reference to the drawings.

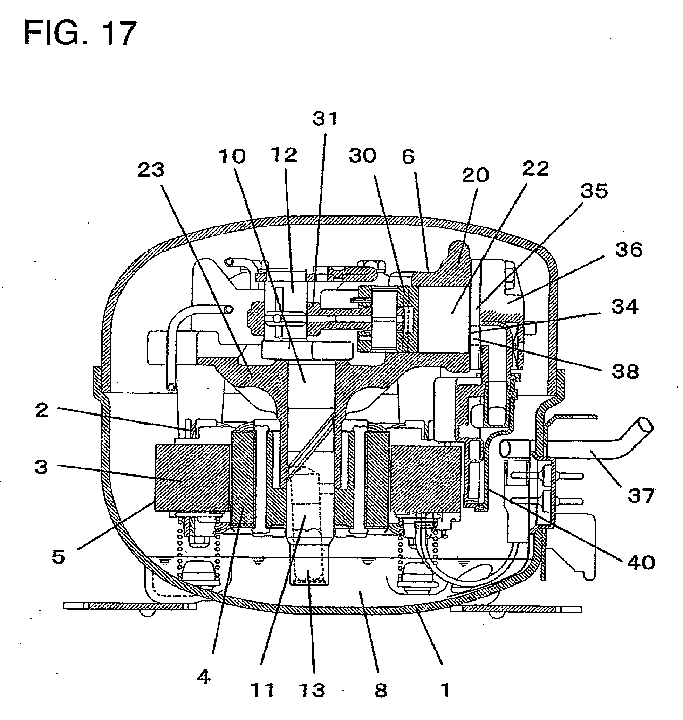

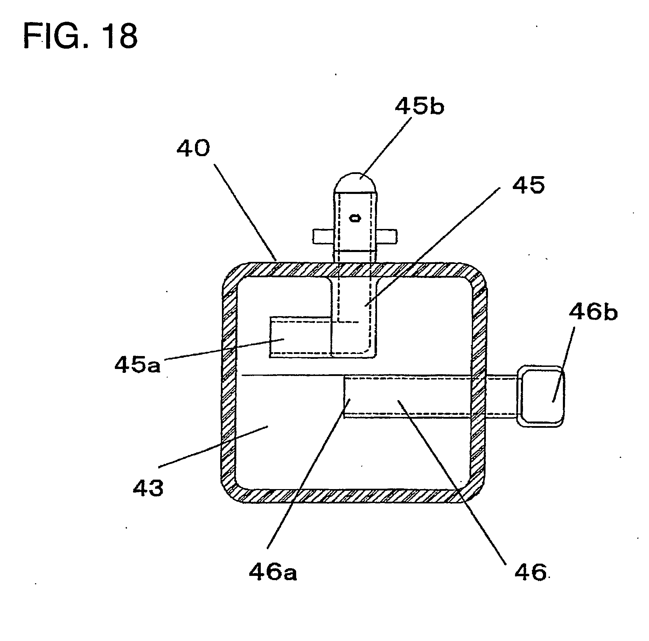

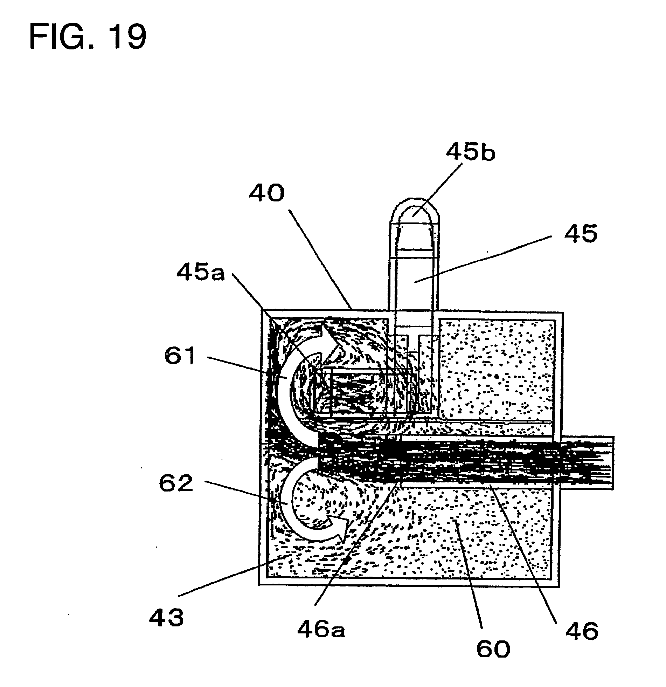

Fig. 17 is a sectional view of the conventional hermetic compressor, Fig. 18 is a sectional view of a suction muffler in Fig. 19, and Fig. 19 is a flow velocity vector diagram showing the behavior of the refrigerant gas by using the flow vector within the suction muffler shown in Fig. 18.

In Fig. 17, a hermetic vessel 1 accommodates: a motor element 5 composed of a rotator 4 and a stator 3 holding a coil portion 2; and a compression element 6 driven by the motor element 5. A lubricating oil 8 is stored in the hermetic vessel 1.

The schematic configuration of the compression element 6 will be described below. A crank shaft 10 has: a main shaft portion 11 where the rotator 4 is press-fitted and fixed; and an eccentric portion 12 formed eccentrically to the main shaft portion 11. Inside the main shaft portion 11, an oil pump 13 is placed so as to be opened in the lubricating oil 8.

A cylinder block 20 formed above the motor element 5 has: a compression room 22 that is approximately cylindrical; and a shaft supporter 23 that supports the main shaft portion 11 with a shaft. A piston 30 is inserted into the compression chamber 22 of the cylinder block 20 so as to be reciprocatingly slidable therein, and linked to the eccentric portion 12 by a linking device 31.

A valve plate 35 for sealing the open end surface of the compression room 22 has a suck hole 38 to be linked to the compression room 22 in accordance with the opening/closing action of a suction valve 34. A cylinder head 36 is fixed through the valve plate 35 to the opposite side to the compression room 22.

A suction tube 37 is fixed to the hermetic vessel 1 and connected to the low pressure side (not shown) of a freezing cycle, and introduces the refrigerant gas (not shown) into the hermetic vessel 1. A suction muffler 40 is fixed because it is interposed between the valve plate 35 and the cylinder head 36, and it is made of synthetic resin, such as polybutylene telephthalate and the like, to which glass fiber is mainly added.

In Fig. 18, the suction muffler 40 has a sound attenuation space 43 and also has: a second linkage path 46 where an open end 46b is linked into the hermetic vessel 1 and an open end 46a is opened while extended to the sound attenuation space 43; and a first linkage path 45 where an open end 45b is linked to the suck hole 38 of the valve plate 35 and an open end 45a is opened while extended to the sound attenuation space 43.

Fig. 19 shows flow velocity vectors 60 indicating the behavior of the refrigerant gas within the suction muffler 40 obtained by a computer simulation. The length of each vector indicates the magnitude of the flow velocity, and the orientation of the vector indicates the flow direction of the refrigerant gas.

Also, respective arrows indicate an upper eddy 61 generated by the upstream flows in the refrigerant gas sucked from the open end 46a of the second linkage path 46, and a lower eddy 62 generated by the downstream flow in the refrigerant gas sucked from the open end 46a of the second linkage path 46.

The operation of the conventional hermetic compressor configured as mentioned above will be described below.

When the rotator 4 of the motor element 5 rotates the crank shaft 10, since the rotation motion of the eccentric portion 12 is transmitted through the linking device 31 to the piston 30, the piston 30 reciprocates inside the compression room 22. Due to this operation, the refrigerant gas is introduced into the hermetic vessel 1 through the suction tube 37 from the cooling system (not shown). The refrigerant gas introduced into the hermetic vessel 1 is sucked from the open end 46b of the suction muffler 40, and released to the sound attenuation space 43 from the open end 46a.

The released refrigerant gas, after colliding with the wall of the casing of the suction muffler 40 that is close and opposite to the open end 46a as shown in Fig. 19, generates the upper eddy 61 and the lower eddy 62, and circulates through the sound attenuation space 43. After that, the refrigerant gas mainly constituted by the upper eddy 61 is sucked from the open end 45a to the first linkage path 45 and introduced into the suck hole 38 opened in the valve plate 35.

Then, when the suction valve 34 is opened, the refrigerant gas is sucked into the compression room 22, and compressed by the reciprocating motion of the piston 30, and discharged into the cooling system.

Here, the pressure pulsation of the refrigerant induced when the refrigerant is sucked into the compression room 22 is propagated in the direction opposite to the flow of the refrigerant as mentioned above and propagated from the open end 45a to the sound attenuation space 43. Here, since the first linkage path 45 is extended into the sound attenuation space 43 where the sound attenuation effect is high, and the open end 45a is located in the node of the sound, for example, in the 3 to 4kHz region where the noise becomes troublesome, it is possible to obtain the high sound attenuation effect in a particular frequency band.

Also, the noise pulsation attenuated in the sound attenuation space 43 is further attenuated by adjusting the dimension of the sound attenuation space 43 and the length and inner diameter of the second linkage path 46. Thus, it is possible to obtain the higher sound attenuation effect.

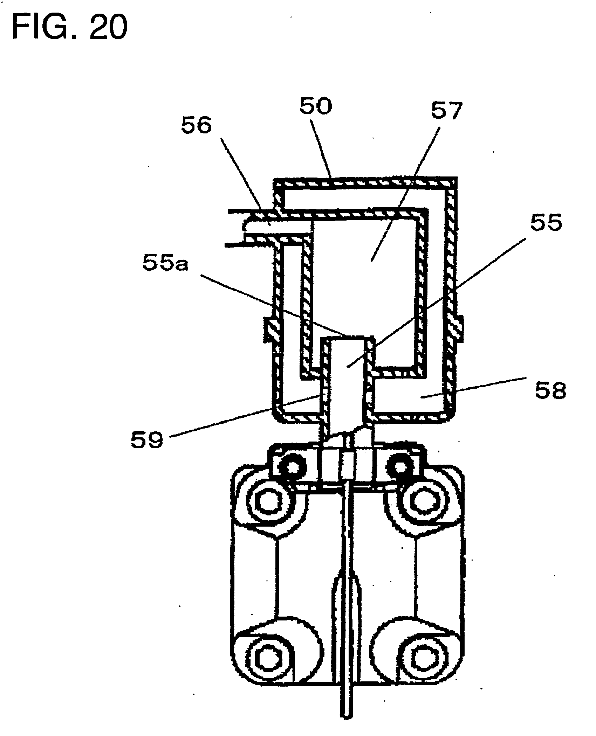

Also, Fig. 20 shows a sectional view of a suction muffler of another conventional hermetic compressor. Another conventional example will be described below with reference to the drawings. By the way, the entire configuration except the suction muffler is similar to the above-mentioned conventional example. Thus, the detailed explanation is omitted.

In Fig. 20, a suction muffler 50 has a resonant space 58 placed so as to surround a suction space 57. In a second linkage path 56, one end is linked to the hermetic vessel 1, and the other end is linked o the suction space 57. In a first linkage path 55, an open end 55a is opened to the suction space 57, and the other end is linked through the suction valve 34 to the compression room 22, and this has a linkage hole 59 to link the first linkage path 55 and the resonant space 58.

The operation of another conventional hermetic compressor configured as mentioned above is explained.

The refrigerant gas of a low temperature returned from a freezing system (not shown), after sucked into the suction space 57 of the suction muffler 50 from the second linkage path 56, is sucked into the compression room 22 from the first linkage path 55. At this time, sin-ce the suction space 57 is surrounded by the resonant space 58, the suction space 57 is thermally insulated by the refrigerant gas in the resonant space 58 and the wall portion constituting the casing of the resonant space 58.

Consequently, the refrigerant gas inside the suction space 57 is not directly heated by the refrigerant gas of a high temperature within the hermetic vessel 1, and the refrigerant gas of a high density can be sucked into the compression room 22. Thus, the suck efficiency can be made higher. Also, since the resonant space 58 is linked through the linkage hole 59 to the suction space 57, it acts as a resonant room, and the noise can be reduced.

However, in the conventional configuration, the refrigerant gas, which is sucked into the suction muffler 40 through the hermetic vessel 1 from the cooling system (not shown) by the reciprocating motion of the piston 30 and released to the sound attenuation space 43 from the second linkage path 46, as shown in Fig. 19, does not directly flow into the first linkage path 45, and it collides with the wall of the casing of the suction muffler 40, which is close and opposite to the open end 46a, and then generates the upper eddy 61 and the lower eddy 62 and circulates through the sound attenuation space 43.

For this reason, the heat-exchange is carried out between the refrigerant gas of the low temperature returned from the cooling system and the refrigerant gas of the high temperature within the hermetic vessel 1. Thus, it is greatly heated.

Moreover, after the circulation flow generated by the upper eddy 61 and the lower eddy 62 is heated by the refrigerant gas whose temperature is increased due to the stay inside the sound attenuation space 43, it is sucked from the open end 45a and flows into the compression room 22. Thus, this has a problem that the mass flow quantity of the refrigerant which can be sucked into the compression room 22 is reduced and the suck efficiency is dropped.

Also, the open end 45a is close and opposite to the wall of the casing of the suction muffler 40. Thus, the wall of the casing of the close opposite suction muffler 40 is vibrated by the influence of the open end 45a in which the pressure pulsation becomes maximum. The pulsation sound of the refrigerant is radiated out of the casing of the suction muffler 40. Hence, this has a problem that the noise is increased.

On the other hand, in another conventional hermetic compressor configuration, the suction space 57 constituting the suction muffler 50 is placed so as to be surrounded by the resonant space 58. Thus, it is possible to protect the refrigerant gas within the suction space 57 from being directly heated by the refrigerant gas within the suction space 57 from being directly heated by the refrigerant gas of the high temperature inside the hermetic vessel 1, and possible to make the suck efficiency higher.

However, the whole of the suction space 57 is configured so as to be surrounded by the resonant space 58. Thus, this has problems that the entire dimension of the suction muffler 50 becomes bigger and the number of parts becomes greater or the molding becomes complex.

US 5,304,044 discloses a hermetic compressor in accordance with the pre-characterising section of claim 1.

EP 1,266,928 discloses a foam material with useful soft cushioning characteristics.

### DISCLOSURE OF THE INVENTION

The present invention solves the above-mentioned conventional problems and has an object to provide the hermetic compressor in which the suck efficiency is high and the noise vibration is small, and the manufacturing method of the suction muffler.

The present invention provides a hermetic compressor including: a motor element within a hermetic vessel; a compression element driven by said motor element; and a suction muffler made of synthetic resin which is linked to said compression element, characterized in that at least a part of a casing of said suction muffler is foam-molded and in that a skin layer in which a bubble does not exist substantially is formed on a surface of said foam-molding.

In order to solve the above-mentioned conventional problems, in the hermetic compressor of the present invention, at least a part of a casing of the suction muffler is foam-molded. Thus, due to the thermal insulating effect of bubbles generated within foamed synthetic resin, this has an action of extremely improving the thermal insulating performance under the same volume, and dropping the loss caused by heat reception, as compared with non-foamed resin, and also has an action of increasing the acoustic transmission loss because acoustic energy is absorbed by the friction between the gas within the bubble and the synthetic resin material around the bubble. The skin layer where the bubble does not exist substantially is formed on the surface of the foam-molding. Thus, the refrigerant and the lubricating oil are hard to permeate into the suction muffler. Hence, in addition to the above-mentioned effects, it is possible to further improve the reliability of the compressor and carry out the stable operation.

The hermetic compressor of the present invention can make the suck efficiency of the refrigerant gas higher and reduce the noise vibration.

On aspect of the present invention has a motor element inside a hermetic vessel, a compression element driven by the motor element, and a suction muffler made of synthetic resin that is linked to the compression element, and at least a part of a casing of the suction muffler is foam-molded. Thus, due to the thermal insulating effect of the bubbles generated within the foamed resin, the thermal insulating performance is extremely improved as compared with the resin of the non-foamed solid material. Also, the heat reception from the refrigerant gas of a low temperature sucked into the suction muffler can be largely reduced, thereby making the suck efficiency higher. Moreover, the absorption of the acoustic energy caused by the friction between the gas within the bubble and the material around the bubble increases the acoustic transmission loss, which enables the reduction in the noise vibration.

In another aspect of the present invention, the bubble diameter obtained by the foam-molding is 50 µm or less. Thus, by reducing the bubble diameter generated within the foamed resin, the number of the bubbles is increased to make the thermal insulating effect higher. Hence, in addition to the above-mentioned effects, the suck efficiency can be made higher.

In another aspect of the present invention, the material of the foam-molding is crystal synthetic resin. Thus, as the feature of the crystal synthetic resin, the chemical resistance is high, and the solubility of the resin material to the refrigerant and the lubricating oil is dropped. Thus, in addition to the above-mentioned effects, it is possible to further improve the reliability of the compressor and carry out the stable operation.

In another aspect of the present invention, the thickness of the skin layer is 30% or less of the plate thickness in the thinnest portion. Thus, by thinning the skin layer which has no bubble and has the low thermal insulating property, it is possible to make the foaming magnification higher, improve the thermal insulating property and make the suck efficiency higher, in addition to the above-mentioned effects.

In another aspect of the present invention, the foaming magnification of the foam-molding is 1.2 times or more. Thus, since the excellent thermal insulating performance is obtained, it is possible to make the suck efficiency higher and obtain the excellent absorption effect of the acoustic energy. Hence, in addition to the above-mentioned effects, the noise vibration can be further reduced.

In another aspect of the present invention, among a plurality of walls constituting the casing, the plate thickness of the wall where the maximum projection area is obtained is thicker than the plate thicknesses of the other walls. Thus, since the space enabling the foaming is enlarged, in addition to the above-mentioned effects, the foaming magnification of the surface occupying most of the surface area can be made higher, thereby improving the thermal insulating property and making the suck efficiency higher.

In another aspect of the present invention, the casing is produced by combining at least two parts, and the two parts are separated and divided in the direction substantially vertical to the wall where the maximum projection area of the casing is obtained. Thus, in addition to the above-mentioned effects, since the bonding surface is placed on the side, the foaming magnification of the surface occupying most of the surface area can be made higher, thereby improving the thermal insulating property and making the suck efficiency higher. Moreover, when the core-back is used, by enlarging the die vertical to the surface where the projection area is large, it is possible to make the foaming magnification of the wide surface higher and improve the thermal insulating property and consequently make the suck efficiency higher.

In another aspect of the present invention, since the plate thicknesses of the corner of the casing and the portion having the high curvature are relatively larger than the other portions, the flow resistance of the resin at the time of the molding is dropped. Thus, in addition to the above-mentioned effects, since the molding is possible at the low pressure, the growth of the bubble through the foaming gas is impelled, and since the foaming magnification is made higher to consequently make the thermal insulating property higher, the loss caused by the heat reception is dropped.

In another aspect of the present invention, the suction muffler includes a sound attenuation space formed inside the casing, a first linkage path to link the compression element and the sound attenuation space, and a second linkage path to link the hermetic vessel and the sound attenuation space, and wherein a wall of the casing, which is close to at least one of the motor element, the compression element, an open end within the sound attenuation space of the first linkage path, and an open end within the sound attenuation space of the second linkage path is designed so as to have at least one of the configuration that it is thicker than the other walls of the casing and the configuration that it is higher in foaming magnification. Thus, the heat-exchange between the heat source residing inside the hermetic vessel and the low temperature refrigerant sucked into the suction muffler can be suppressed effectively under the small volume. Hence, in addition to the above-mentioned effects, it is possible to effectively make the suck efficiency higher under the small volume.

In another aspect of the present invention, the lubricating oil is stored in the hermetic vessel, and at least one of the walls of the casing of the suction muffler to which the lubricating oil is supplied is designed so as to have at least one of the configuration that it is thicker than the other walls of the casing and the configuration that it is higher in foaming magnification. Thus, the heat-exchange at a wall of the suction muffler, where the lubricating oil of a high temperature flows, is effectively suppressed. Hence, in addition to the above-mentioned effects, it is possible to effectively make the suck efficiency higher under the small volume.

In another aspect of the present invention, the casing of the suction muffler has a suction muffler body and a suction muffler cover, and the bonding portion between the suction muffler body and the suction muffler cover has the foaming magnification that is relatively lower as compared with the portions except the bonding portion, or it is not foam-molded. Since the vibration absorption effect through the bubble is suppressed, in addition to the above-mentioned effects, the bonding strength can be made higher.

In another aspect of the present invention, the linkage path to link the inner portion of the hermetic vessel and the sound attenuation space of the suction muffler is formed integrally with the farthest element from the motor element, among the plurality of elements constituting the casing of the suction muffler. Thus, in addition to the above-mentioned effects, the number of the parts is reduced to reduce the cost. Also, by placing the surface having the low thermal insulating performance on the side far away from the motor element, the thermal insulating performance is made higher as the entire suction muffler, and the loss caused by the heat reception is reduced.

In another aspect of the present invention, a part of the casing of the suction muffler is interposed between the cylinder head and the valve plate, which constitute the compression element, and the interposed part of the casing has the relatively low foaming magnification, or it is not foam-molded. Thus, the strength of the engaged portion is held, which enables the muffler to be surely held. Hence, in addition to the above-mentioned effects, the occurrence of an abnormal tone and the like can be protected.

In another aspect of the present invention, a part of the casing of said suction muffler is interposed between the cylinder head and the valve plate which constitute said compression element, and the thickness of said interposed part of said casing is thicker than the other portions. Thus, the strength of the engaged portion is held, which enables the muffler to be surely held. Hence, in addition to the above-mentioned effects, the occurrence of an abnormal tone and the like can be protected.

In another aspect of the present invention, at a rotation number including a rotation number less than a commercial power supply frequency or less, the motor element is inverter-driven, which absorbs the noise associated with the fast pulsation flow of the refrigerant at the time of the fast rotation number operation where the refrigerant circulation quantity is great. Thus, in addition to the above-mentioned effects, the noise can be further reduced.

In another aspect of the present invention, the rotation number is 20 r/sec or less, which consequently suppresses the heat-exchange between the low temperature refrigerant gas sucked into the suction muffler and the heat source, such as the high temperature refrigerant gas and the like, inside the hermetic vessel when the low rotation number operation causes the drop in the refrigerant flow velocity. Thus, in addition to the above-mentioned effects, the suck efficiency can be further reduced.

In another aspect of the present invention, since the refrigerant gas compressed by the compression element is R600a, the refrigerant circulation quantity is increased, and the noise of the high frequency in the audible region associated with the fast pulsation flow of the refrigerant gas is absorbed. Thus, in addition to the above-mentioned effects, the noise can be further reduced.

Also described is a manufacturing method of a suction muffler, which foam-molds at least a part of a casing of a suction muffler made of synthetic resin for a hermetic compressor, wherein in the molding course, a core-back is used to move a part of a die, enlarge a cavity and make a plate thickness thicker. Then, by enlarging the die, the pressure is dropped and the gas is expanded, thereby impelling the foaming. Thus, in addition to the above-mentioned effects, since the higher foaming magnification is obtained, the excellent thermal insulating performance is obtained, thereby enabling the suck efficiency to be made higher.

Further described is a manufacturing method of a suction muffler, which foam-molds at least a part of a casing of a suction muffler made of synthetic resin for a hermetic compressor, wherein a section area of a gate serving as a resin supplying portion to cavities inside a die is equal to or greater than 70% of a square of a plate thickness of the casing. Thus, since the resistance when the resin flows from the gate is dropped, in addition to the above-mentioned effects, the molding is possible under the low pressure, which impels the growth of the bubble through the foamed gas. Then, by making the foaming magnification higher and making the foaming magnification higher, the loss caused by the heat reception is reduced.

Further described is a manufacturing method of a suction muffler, which foam-molds at least a part of a casing of a suction muffler made of synthetic resin for a hermetic compressor, wherein two or more gates serving as resin supplying portions to cavities inside a die are installed for at least one unit. Thus, the installation of the plurality of gates causes the resin to be easily permeated into the die. Hence, in addition to the above-mentioned effects, the molding is possible under the low pressure, which impels the growth of the bubble through the foamed gas. Then, by making the foaming magnification higher and making the foaming magnification higher, the loss caused by the heat reception is reduced.

### BRIEF DESCRIPTION OF THE DRAWINGS

Fig. 1 is a sectional view of a hermetic compressor in a first embodiment 1 of the present invention;
Fig. 2 is a sectional view of a suction muffler in the same embodiment;
Fig. 3 is an enlarged sectional view of a wall A portion in Fig. 2;
Fig. 4 is a main portion sectional view of a corner of the hermetic compressor in the same embodiment;
Fig. 5A is a schematic configuration view of a foam molding machine in the same embodiment;
Fig. 5B is a schematic configuration view of a foam molding machine in the same embodiment;
Fig. 5C is a schematic configuration view of a foam molding machine in the same embodiment;
Fig. 6 is a front view showing a suction muffler body and a runner in the same embodiment;
Fig. 7 is a sectional view of a suction muffler in a second embodiment of the present invention;
Fig. 8 is an enlarged view of a foaming portion of the suction muffler in the same embodiment;
Fig. 9 is a rear view of a suction muffler body in the same embodiment;
Fig. 10 is a decomposed perspective view of the suction muffler in the same embodiment;
Fig. 11 is an enlarged view of a bonded section between a cover and the suction muffler in the same embodiment;
Fig. 12A is a schematic configuration view of a supercritical foam molding machine in the same embodiment;
Fig. 12B is a schematic configuration view of a supercritical foam molding machine in the same embodiment;
Fig. 12C is a schematic configuration view of a supercritical foam molding machine in the same embodiment;
Fig. 13 is a sectional view of a hermetic compressor in a third embodiment of the present invention;
Fig. 14 is a decomposition view of a suction muffler in the same embodiment;
Fig. 15A is a schematic configuration view of a supercritical foam molding machine in the same embodiment;
Fig. 15B is a schematic configuration view of a supercritical foam molding machine in the same embodiment;
Fig. 15C is a schematic configuration view of a supercritical foam molding machine in the same embodiment;
Fig. 16 is a decomposition view of a suction muffler in a fourth embodiment of the present invention;
Fig. 17 is a sectional view of a conventional hermetic compressor;
Fig. 18 is a sectional view of a suction muffler in the conventional hermetic compressor;
Fig. 19 is a flow velocity vector view inside the suction muffler of the conventional hermetic compressor; and
Fig. 20 is a sectional view of the suction muffler in the conventional hermetic compressor.

### BEST MODE FOR CARRYING OUT THE INVENTION

An embodiment of the present invention will be described below with reference the drawings. By the way, this embodiment does not limit the present invention.

### (First Embodiment)

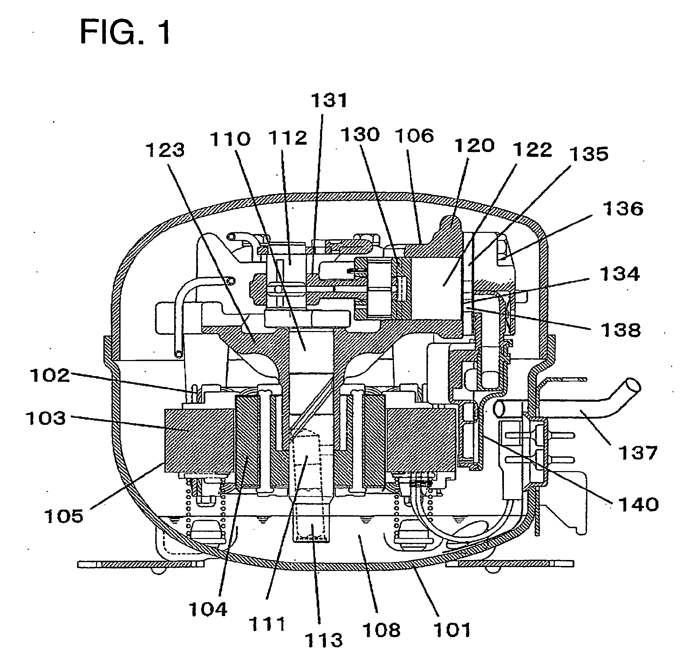

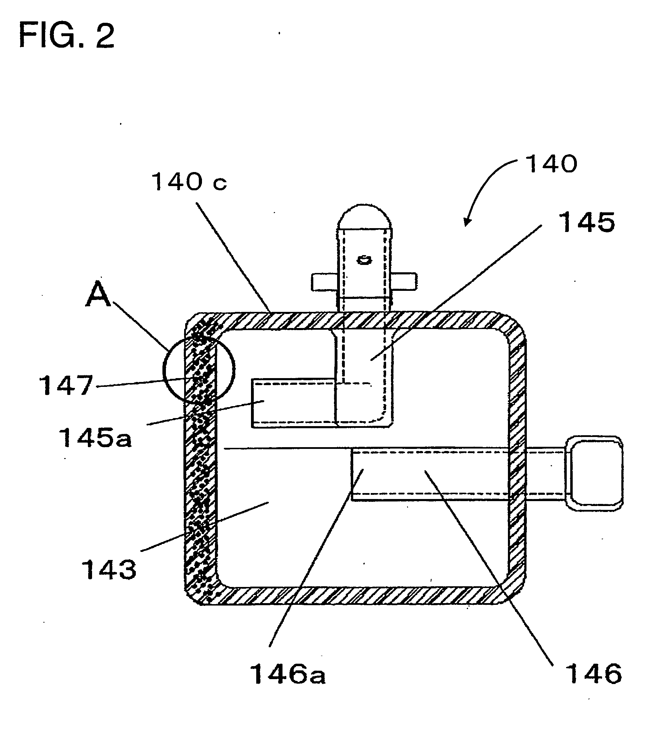

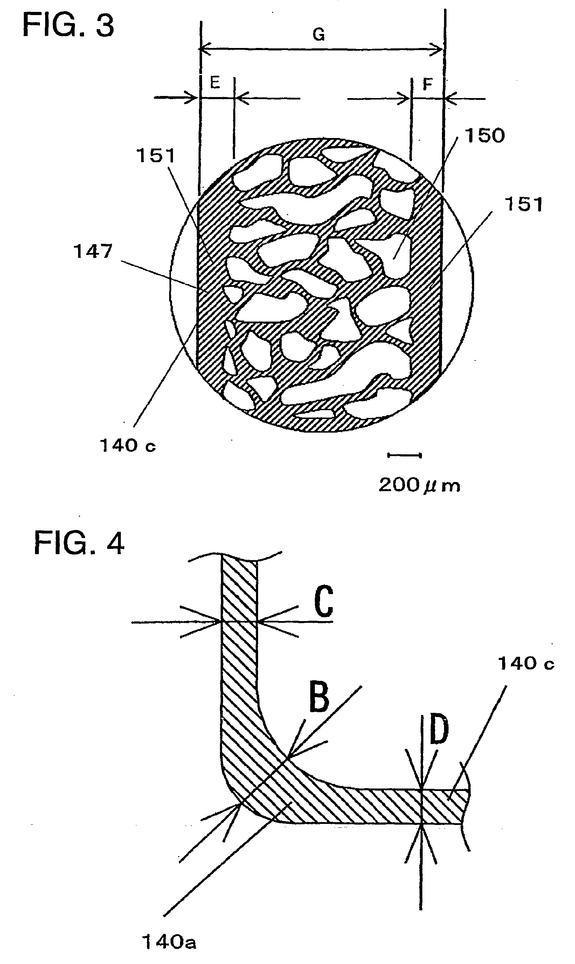

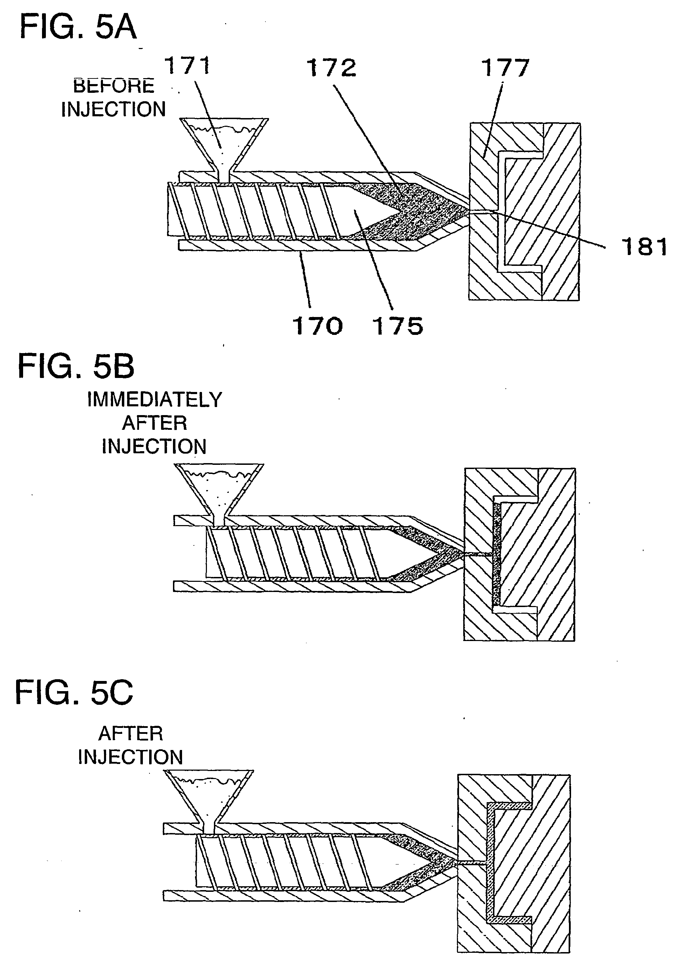

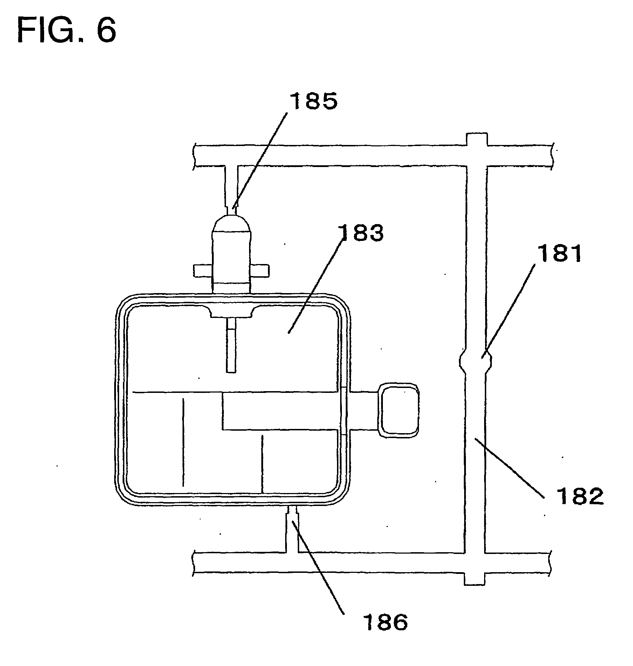

Fig. 1 is a sectional view of a hermetic compressor in the first embodiment of the present invention, and Fig. 2 is a sectional view of a suction muffler of the hermetic compressor in the same embodiment. Fig. 3 is an enlarged sectional view of a wall A-portion in Fig. 2. Fig. 4 is a main portion sectional view of a corner in the suction muffler in the same embodiment. Figs. 5A to 5C are schematic configuration views of a foam molding machine in the same embodiment. Fig. 6 is a front view showing a suction muffler body and a runner in the same embodiment.

In Fig. 1, a hermetic vessel 101 accommodates: a motor element 105 composed of a rotator 104 and a stator 103 holding a coil portion 102; and a compression element 106 driven by the motor element 105. A lubricating oil 108 is stored in the hermetic vessel 101. By the way, as refrigerant gas (not shown), R600a of natural refrigerant is used.

Also, the motor element 105 is driven by an inverter method including a rotation number of 20r/sec or less.

The schematic configuration of the compression element 106 will be described below.

A crank shaft 110 has: a main shaft portion 111 where the rotator 104 is press-fitted and fixed; and an eccentric portion 112 formed eccentrically to the main shaft portion 111. Inside the main shaft portion 111, an oil pump 113 is placed so as to be opened in the lubricating oil 108.

A cylinder block 120 formed above the motor element 105 has: a compression room 122 that is approximately cylindrical; and a shaft supporter 123 that supports the main shaft portion 111 with a shaft. A piston 130 is inserted into the compression chamber 122 of the cylinder block 120 so as to be reciprocatingly slidable therein, and linked to the eccentric portion 112 by a linking device 131.

A valve plate 135 for sealing the open end surface of the compression room 122 has a suck hole 138 to be linked to the compression room 122 in accordance with the opening/closing action of a suction valve 134. A cylinder head 136 is fixed through the valve plate 135 to the opposite side to the compression room 122. A suction tube 137 is fixed to the hermetic vessel 101 and connected to the low pressure side (not shown) of a freezing cycle, and introduces the refrigerant gas (not shown) into the hermetic vessel 101.

A suction muffler 140 is fixed because it is interposed between the valve plate 135 and the cylinder head 136, and it is made of synthetic resin, such as polybutylene telephthalate and the like, to which glass fiber is mainly added.

Moreover, the suction muffler 140 has: a casing 140C composed of a plurality of walls; a first linkage path 145 and a second linkage path 146, and a sound attenuation space 143 is formed inside the casing 140C. Inside a wall 147 of the casing 140C of the suction muffler 140 which is close and opposite to open ends 145a, 146a within the sound attenuation space, in order to generate innumerable bubbles 150 of about 100 µm at a bubbling magnification of 1.2 times or more, a non-foaming skin layer 151 where a plate thickness is 3 to 5mm and thicker than the other portions and bubbles are not contained in the vicinity of the surface is formed.

Moreover, the thicknesses E, F of the skin layer are about 10 to 20% of a plate thickness G. Then, a plate thickness B of a corner 140a of the casing 140C of the suction muffler 140 is thicker than the plate thicknesses C, D of a flat portion.

By the way, the bubble 150 made by a foaming resin molding (which will be described later in detail) is generated at the size of a bubble density of about 10⁷ cells/cm³ and a bubble diameter of about 100 µm by adjusting the thickness of the wall and the molding temperature and molding pressure at the time of the foam molding. Due to the thermal insulation effect of the bubble 150, the thermal insulation performance improvement of about 5 to 10% is attained as compared with a non-foaming solid material.

On the other hand, as shown in Figs. 5A to 5C, an injection molder 170 is provided with a raw material inserter 171, a fusion injector 172, a die unit 177, a controller (not shown) for controlling the drive of the die unit 177 and the cooling temperature and the like and adjusting the bubble density and the bubble diameter.

The molding process for the foaming resin by using the injection molder 170 will be described below.

At first, as shown in Figs. 5A to 5C, the raw material pellet of polybutylene telephthalate and the pellet of the chemical foaming agent such as azo compound represented by azodicalbonamide and the like are thrown into the raw material inserter 171. The thrown into raw material pellet and foaming agent pellet are fused at a temperature of about 250°C or more in the fusion injector 172, mixed by a screw 175 built in the fusion injector 172, squeezed by the screw 175 and injected into the die unit 177.

Then, as shown in Fig. 6, the fused resin supplied into the die unit 177 from a sprue 181 is passed through a runner 182 serving as a flowing path and supplied to a plurality of cavities 183 having the shapes of the molded products which are formed inside the die. Two gates 185, 186 serving as the inlets of the resin to the cavities 183 are placed for one part. They are selected such that the section areas of the gates 185, 186 are thinner than the runner 182, the thicknesses are 30 to 40% of the wall thickness, and the widths are about three times the thicknesses.

As for the fused resin flowing into the cavities 183 from the gates 185, 186, the friction when it is passed through the gates 185, 186 causes the increase in the temperature and the drop in the pressure. In association with the chemical reaction and the like, the mixed fused foaming agent is gasified within the cavity 183, and it becomes the foaming gas in the fused raw material, and the bubble is generated.

On the other hand, since the die unit 177 has the structure cooled by gas and liquid, the raw material and foaming gas which are injected into the cavities 183 defined by the die unit 177 are cooled to a constant temperature and consequently molded. At this time, the controller adjusts the injection quantities and injection temperatures of the raw material and foaming agent and the cooling temperature of the die unit 177 and the like, and controls the temperature and pressure at the time of the molding. Thus, it is possible to arbitrarily adjust the bubble density and bubble diameter of the foaming resin.

Concretely, the high foaming magnification can be obtained by setting the quantity of the fusion resin injected into the cavities 183 defined by the die unit 177 to be smaller than the volume of the cavities 183, and filling the remaining space with the expansion through the foaming.

Moreover, the fusion resin is high in viscosity. Thus, when the fusion resin flows through the cavities 183 defined by the die unit 177, the flow is the fastest at the center of the plate thickness of the molded member. As it approaches the surface of the die unit 177, the velocity becomes slower. The region where the resin does not substantially flow appears in the very vicinity of the surface of the die unit 177.

For this reason, the fusion resin is sharply cooled because it is adhered closely to the die unit 177 of the low temperature at the substantially static state. Thus, on the surface of the die unit 177, the resin is hardened before the formation of the bubble. Hence, the skin layer is formed in which the bubble does not exist substantially.

Thus, as the plate thickness becomes thinner, the rate of the layer having the bubbles generated between the skin layer and the skin layer becomes small, which leads to the situation that as a whole, the bubble is little and the thermal insulation property is low.

However, as already explained, by setting the plate thickness of the wall of the suction muffler 140, which is close and opposite to the open ends 145a, 146a within the sound attenuation space, to 3 to 5mm that is thicker than the plate thicknesses of the other walls, the thicknesses E, F of the skin layers can be limited to about 10 to 20% of the plate thickness G, and by setting the foaming magnification at about 1.2 times at the weight ratio to the solid member, the thermal insulation property can be partially improved.

Also, as can be easily understood from the mechanism of the formation of the skin layer, as the plate thickness is thinner, the gap where the fusion resin can actually flow becomes extremely narrower, and the resistance against the flow of the fused resin is increased.

On the other hand, the pressure caused by the foaming gas is relatively weak. Thus, if there is the portion having the large resistance, the resin does not sufficiently flow. Hence, the cavities 183 defined by the die unit 177 cannot be filled with the resin. Reversely, in order to avoid the lack of the filling, the large quantity of the resin is injected at the high pressure, which results in the drop in the foaming magnification.

On the contrary, as shown in Fig. 4, by increasing the thickness of the corner 140a of the die where the resistance becomes especially easily large, it is possible to make the foaming magnification higher, and possible to make the thermal insulation-property higher. Also, due to the supply of the resin from the two gates 185, 186, even in the case of the die where the plate thickness is thin and the flow resistance is large, even at the low pressure, it is easy to fill the resin in the entire die, which enables the foaming magnification to be higher and enables the thermal insulating property to be higher.

Moreover, by adjusting the position of the gate, the plate thickness of the part and the die temperature, it is also possible to adjust the foaming magnification for each portion.

The operation of the hermetic compressor in this embodiment having the above-mentioned configuration is explained.

The refrigerant gas introduced into the hermetic vessel 101 by the reciprocating motion of the piston is sucked from the suction muffler 140, and released to the sound attenuation space 143 from the open end 146a within the sound attenuation space. The released refrigerant gas collides with the wall 147 of the casing 140C of the suction muffler 140 which is close and opposite to the open end 146a within the sound attenuation space, and then circulates through the sound attenuation space 143. After that, the refrigerant gas mainly circulating through the upper portion is sucked to the first linkage path 145 from the open end 145a within the sound attenuation space, and compressed in the compression room 122 and discharged to the cooling system.

Here, in order to reserve the foaming magnification of 1.2 times or more only for the wall 147 of the casing of the suction muffler 140 where the main flow of the refrigerant gas flowing from the open end 146a within the sound attenuation space into the open end 145a within the sound attenuation space is generated, the plate thickness is set to 3 to 5mm, thereby obtaining the thermal insulating effect which is partially high. Consequently, as compared with the case of foam-molding the suction muffler 140 as a whole, it is possible to obtain the effective thermal insulating effect at the small volume.

As a result, the action for maintaining the refrigerant gas at the state of the low temperature and high density can be effectively made higher, thereby increasing the mass flow quantity of the refrigerant gas. In particular, at the low operation rotation number of 20r/sec or less where the flow velocity of the refrigerant gas is dropped and the stay time of the refrigerant gas within the suction muffler 140 is longer, the reduction effect of the loss caused by the heat reception is extremely large.

Due to the suppression of the temperature increase in the refrigerant gas as mentioned above, the temperature increase between the open end 146a within the sound attenuation space and the open end 145a within the sound attenuation space can be suppressed to 2K or less. Thus, the freezing performance is improved by 1.5% as compared with the conventional suction muffler specification, and the efficiency (hereafter, referred to as COP) is improved by 1.0% or more.

On the other hand, the refrigerant gas within the suction muffler 140 becomes the intermittent flow corresponding to the reciprocating motion of the piston 130. At this time, the pressure pulsation is propagated in the direction opposite to the flow of the refrigerant gas, towards the open end 145a within the sound attenuation space, and a reflection wave is generated towards the wall 147 which is close and opposite to the open end 145a within the sound attenuation space.

For this reflection wave, the vibration loss caused by the vibration of the wall member itself constituting the casing of the suction muffler 140 and the vibration energy caused by the friction between the gas within the bubble and the material around the bubble are absorbed, which can increase the acoustic transmission loss. In particular, it is confirmed that this has the effect on the transmission sound reduction in the high frequency component in an audible region.

In particular, since this embodiment uses R600a that is the natural refrigerant, the refrigerant circulation quantity is increased as compared with the case of R134a. Thus, the pulsation flow of the refrigerant gas sucked into the suction muffler 140 is fast, which easily induces the noise of the high frequency. That tendency severely appears in the rotation number of a commercial power supply frequency or more. For this phenomenon, since the wall 147 that is close and opposite to the open end 145a within the sound attenuation space to which the reflection wave is radiated is foam-molded, the effect of reducing the noise in the audible region is extremely higher.

Also, since the suction muffler 140 uses the polybutylene telephthalat that is the crystal synthetic resin, its chemical resistance is strong. The resin is not substantially fused in the refrigerant and the lubricating oil 108, which improves the reliability and enables the stable operation of the compressor.

Also, the skin layer 151 where the bubble does not exist is formed in the vicinity of the surface of the wall 147 where the suction muffler 140 is foam-molded. Thus, the refrigerant and the lubricating oil 108 are never permeated into the inner space of the suction muffler 140, which improves the reliability and enables the stable operation of the compressor.

Moreover, by setting the foaming magnification to about 1.2 times, as compared with the case of using the solid material of the non-foaming resin and forming the suction muffler of the same shape, it is possible to reduce the usage quantity of the resin material, and possible to rationalize the raw material cost.

Thus, it is possible to reduce the loss caused by the heat reception and make the suck efficiency higher and also possible to reduce the noise, and possible to improve the reliability and carry out the stable operation.

### (Second Embodiment)

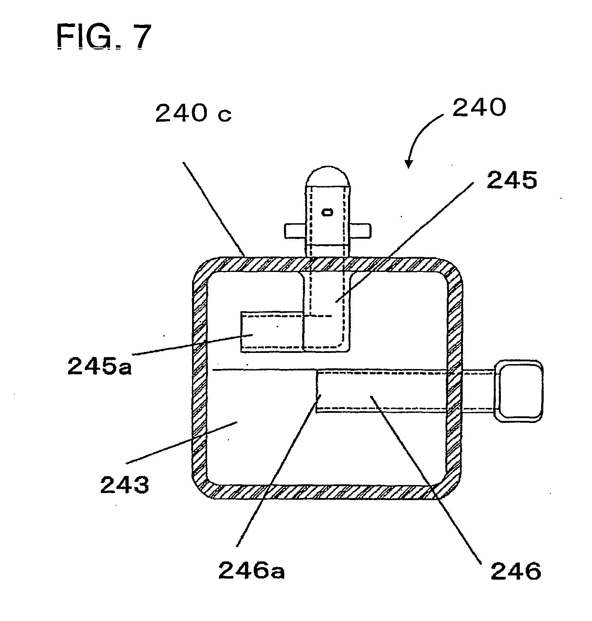

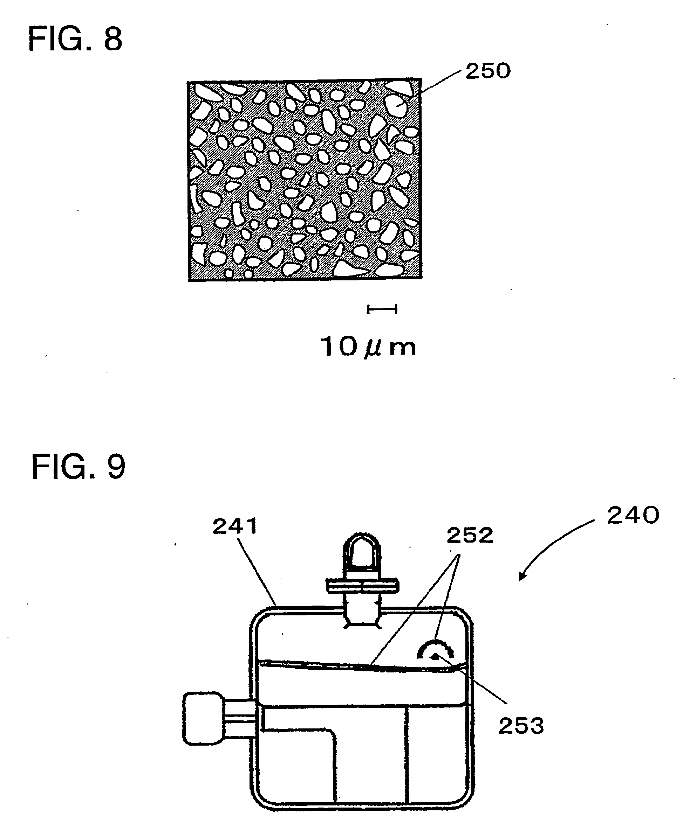

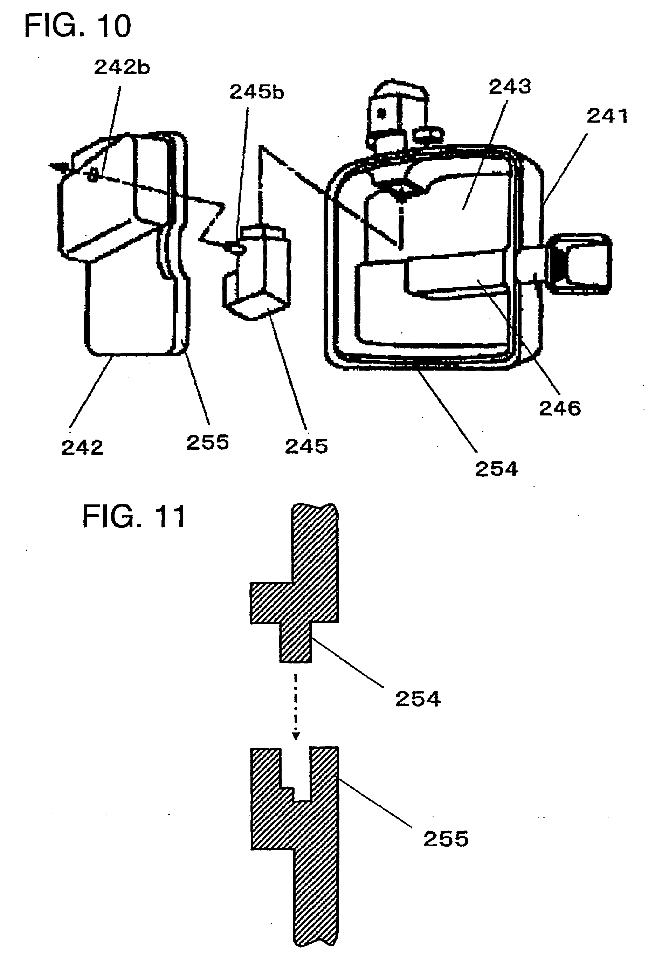

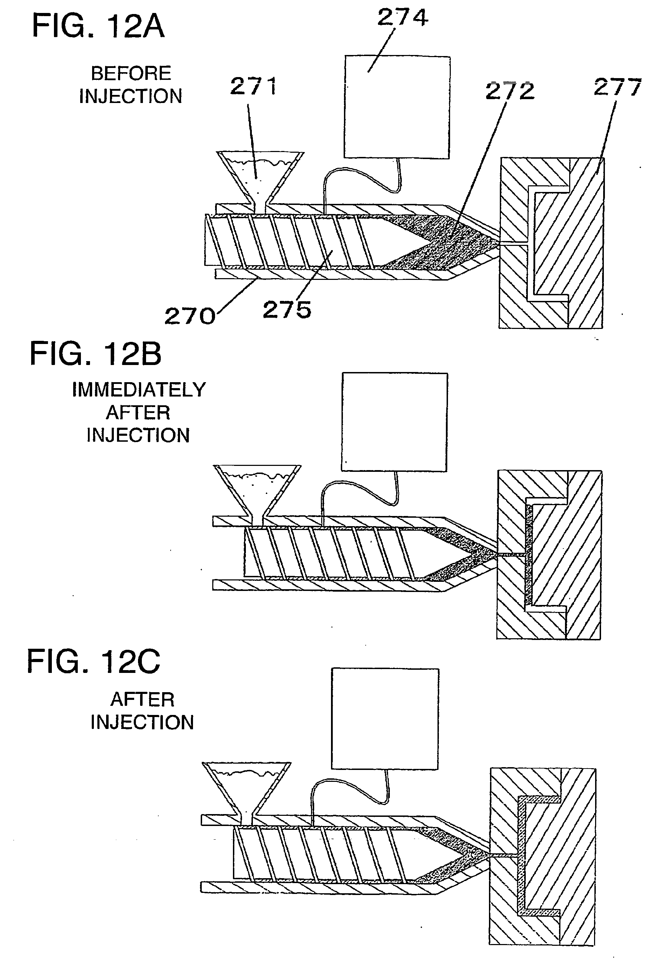

Fig. 7 is a sectional view of a suction muffler of a hermetic compressor in the second embodiment of the present invention, and Fig. 8 is an enlarged view of a foaming portion of the suction muffler in the same embodiment. Fig, 9 is a rear view of a suction muffler body in the same embodiment, Fig. 10 is a decomposed perspective view of the suction muffler of the hermetic compressor in the same embodiment, and Fig. 11 is an enlarged view of a bonding section between a cover and the suction muffler body in the same embodiment. Figs. 12A to 12C are schematic configuration views of a supercritical foam molding machine in the same embodiment. By the way, the configuration of the hermetic compressor in this embodiment is the same configuration as the first embodiment except the suction muffler. Thus, the explanation is omitted.

As shown in Fig. 7, the suction muffler 240 has a casing 240C composed of a plurality of walls, a first linkage path 245 and a second linkage path 246, and a sound attenuation space 243 is formed inside the casing 240C. Here, the casing 240C of the suction muffler 240 is molded by using a supercritical foam molding (which will be described later in detail), and the micro bubbles of bubble diameters of 1 to 50 µm resides in the entire wall except the portions where film thicknesses are thin. Here, the bubbles 250 generated by the supercritical foam molding process are generated at the high densities of about 10⁹ to 10¹⁵ cells/cm3. Thus, as compared with the non-foaming solid material, the thermal insulating performance can be improved by about 20% or more. Here, bubbles 250 are formed inside the walls of the casing 240C. Although not shown, the surfaces on the walls of the casing 240C are covered by the skin layer where the bubbles 250 do not exist.

Also, as shown in Fig. 9, a suction muffler body 241 constituting the main portion of the casing 240C has: a lubricating oil supplying path 252 formed in the shape of a rib on the outer surface of the suction muffler body 241 so as to send the lubricating oil 108; and a lubricating oil supplying hole 253 to suck the lubricating oil into the suction muffler 240 from the lubricating oil supplying path 252.

On the other hand, after the first linkage path 245 is inserted and assembled into the suction muffler body 241, a welding protrusion 245b is positionally matched with a hole 242b of a suck muffler cover 242. After that, the suction muffler body 241 and the suck muffler cover 242 are bonded by using a supersonic welding method and the like, and the suction muffler 240 is completed.

Here, the suction muffler 240 is configured so as to be bonded by a body side bonding portion 254 formed around the suction muffler body 241 and a cover side bonding portion 255 formed around the suck muffler cover 242. The plate thicknesses of the body side bonding portion 254 and cover side bonding portion 255 are both designed so as to be equal to or less than the basic wall thickness of the casing 240C of the suction muffler 240.

By the way, a supercritical foam molding machine 270 used to mold the suction muffler 240 in this embodiment is provided with a raw material inserter 271, a supercritical gas generator 274, a fusion injector 272, a die unit 277 and a controller (not shown) for controlling the drive of the die unit 277 and the cooling temperature, as shown in Figs. 12A to 12C. Since the inactive gas, such as carbon dioxide, nitrogen and the like, is used without using the foaming agent, such as azo-compound, flon and the like, which is environmental load substance, the environmentally friendly molding is executed.

The molding process for the foaming resin using the supercritical foam molding machine 270 will be described below.

At first, the raw material pellet of the polybutylene telephthalate is thrown into the raw material inserter 271. The thrown into raw material pellet is fused at a temperature of about 250°C or more in the fusion injector 272. On the other hand, the carbon dioxide or nitrogen of the physical foaming agent which becomes at the supercritical state in the supercritical gas generator 274 is injected into the fusion injector 272, and mixed as the high pressure solution with resin raw material by a screw 275. After that, together with the raw material fused by the screw 275, the foaming agent at the supercritical state is injected to the die unit 277.

Then, the sharp volume change and temperature change, which are induced at the time of the injection to the die unit 277, cause the foaming agent at the supercritical state to be gasified, thereby generating the bubble. At this time, the controller adjusts the injection quantities and injection temperatures of the raw material and foaming agent, and the pressure, and the temperature of the die unit 277 and the like, and controls the temperature and pressure at the time of the molding. Thus, it is possible to arbitrarily adjust the bubble density and bubble diameter of the foaming resin.

Moreover, the fusion resin is high in viscosity. Thus, when the fusion resin flows through the die unit 277, the flow is the fastest at the center of the plate thickness. As it approaches the surface of the die unit 277, the velocity becomes slower. The region where the resin does not substantially flow appears in the very vicinity of the surface of the die unit 277. Thus, the fusion resin is sharply cooled because it is adhered closely to the die unit 277 of the low temperature at the substantially static state. Thus, on the surface of the die unit, the resin is hardened before the formation of the bubble. Hence, the skin layer is formed in which the bubble does not exist substantially.

The operation of the hermetic compressor configured as mentioned above will be described below.

In this embodiment, the carbon dioxide and nitrogen at the supercritical state melted into the resin material at the fused state are gasified in response to the change in the temperature and pressure, which enables the generation of the very micro bubbles of the diameters of 1 to 50 µm.

As a result, the micro bubbles are generated on all of the walls without any change in the basic design dimensions of the suction muffler 240. Thus, it is possible to improve the thermal insulating performances of all of the walls close to the high temperature heat source, such as the rear side wall of the suction muffler body 241 where the motor element 105 is located and the lubricating oil supplying path 252 is formed, the vicinity of the open end linked to the compression element 106, the wall which is close and opposite to the open end 246a within the sound attenuation space where the low temperature refrigerant gas sucked into the suction muffler 240 is released to the sound attenuation space 243, and the like.

As a result, the heat reception of the refrigerant gas of the low temperature sucked into the suction muffler 240 can be largely decreased, thereby maintaining the density of the refrigerant gas low and increasing the mass flow quantity of the sucked refrigerant gas.

As the above-mentioned result, the drop in the loss caused by the heat reception from the refrigerant gas enables the increase in the suck efficiency. As compared with the conventional example, the freezing performance is improved by 2,5%, and the COP is improved by 2.0% or more.

On the other hand, due to the improvement effect of the acoustic transmission loss caused by the innumerable bubbles generated so as to cover the whole of the suction muffler 240, the noise vibration caused by the pulsation flow and the reflection flow radiated to the wall of the close opposite casing from the open end 245a within the sound attenuation space is largely reduced. In particular, this has the effect on the transmission sound drop of the high frequency component in the audible region.

Moreover, the usage of the supercritical foam molding technique in this embodiment enables the micro independent bubbles to be generated on all of the walls of the suction muffler 240. Thus, without substantially decreasing the mechanical strength of the material and by setting the foaming magnification to 1.2 times or more, it is possible to reduce the usage quantity of the raw material by 20% or more, and possible to rationalize the raw material cost.

Also, in the body side bonding portion 254 and cover side bonding portion 255 of the suction muffler body 241, by making the wall thickness thinner than the basic wall thickness, it is possible to suppress the generation of the bubbles, suppress the vibration drop effect in the bonding portion and carry out the idea to keep the bonding strength through the vibration of the supersonic welding.

By the way, in this embodiment, the wall thickness is thinner than the basic wall thickness in the body side bonding portion 254 and the cover side bonding portion 255. However, by making the wall thickness equal to or thicker than the basic wall thickness and making the bubbles reside in all of the walls of the suction muffler 240, it is natural to further reduce the light reception from the refrigerant gas.

Also, in this embodiment, the explanation of the specification overlapping with the first embodiment is omitted. However, the improvement of the reliability resulting from the chemical resistance of the crystal synthetic resin and the permeation protection effect of the refrigerant and lubricating oil through the skin layer, and the effect of the operational stabilization of the compressor can be similarly obtained even in this embodiment.

Also, the noise drop effect in the audible region in association with the fast pulsation flow of the refrigerant gas in the high rotation number, and the heat reception drop effect within the suction muffler 240 in association with the low velocity flow of the refrigerant gas in the low rotation number of the 20 r/sec or less can be made higher as compared with the first embodiment.

### (Third Embodiment)

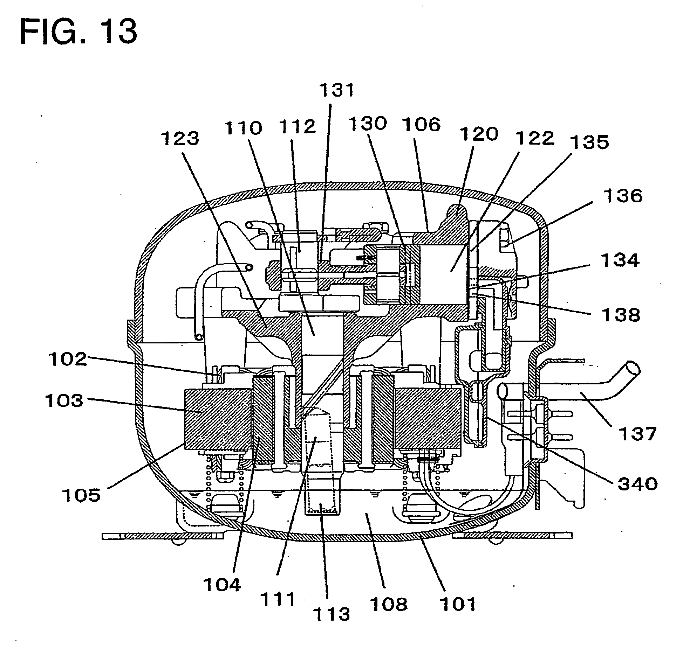

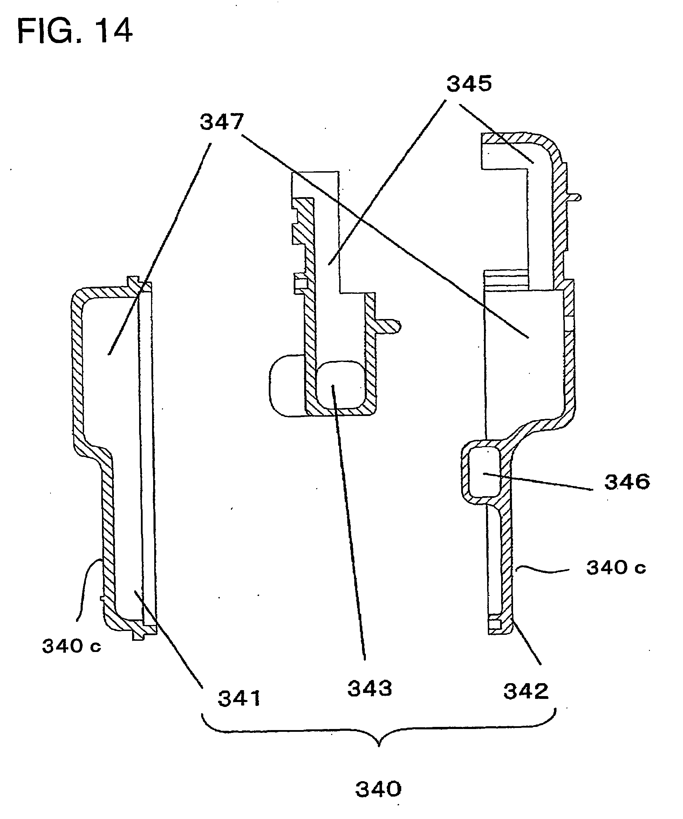

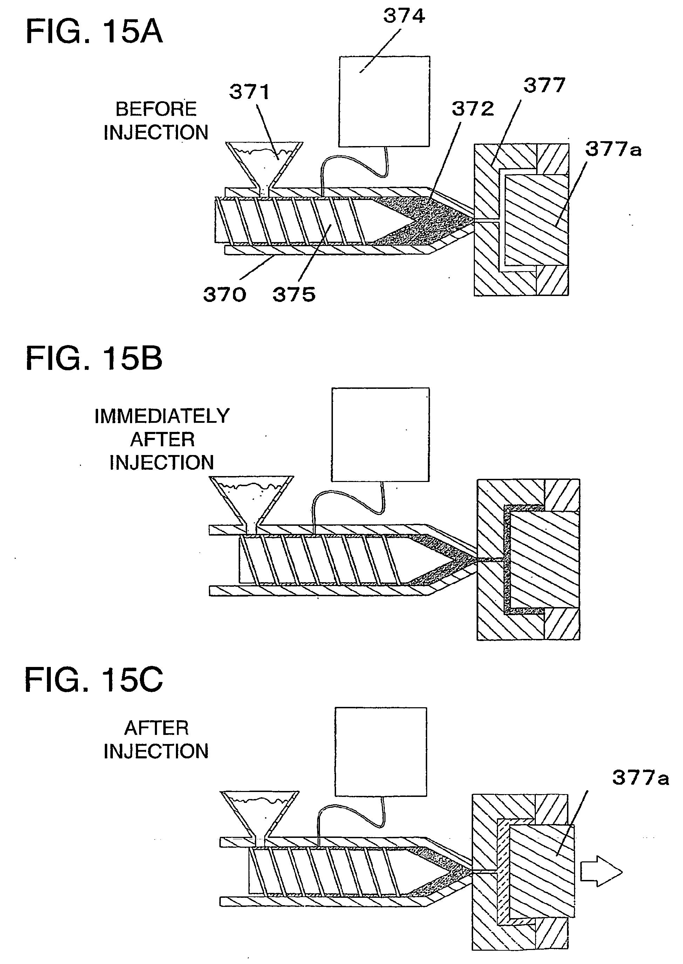

Fig. 13 is a sectional view of a hermetic compressor in the third embodiment of the present invention, and Fig. 14 is a decomposition view of a suction muffler in the same embodiment. Figs. 15A to 15C are schematic configuration views of a supercritical foam molding machine in the same embodiment. By the way, the configuration of the hermetic compressor in this embodiment is the same configuration as the second embodiment, except the suction muffler. Thus, the explanation is omitted.

A suction muffler 340 is composed of three parts of a motor element side 341, an anti-motor element side 342 and a center 343. Most of the portions of their elements constitute a casing 340C. The suction muffler 340 where the three parts of the motor element side 341, the anti-motor element side 342 and the center 343 are combined has a first linkage path 345 and a second linkage path 346, and a sound attenuation space 347 is formed inside the casing 340C. Also, the first linkage path 345 is formed on the bonding surface between the center 343 and the anti-motor element side 342, and the second linkage path 346 is formed integrally with the part of the anti-motor element side 342.

Moreover, the suction muffler 340 is interposed between the cylinder head 136 and the valve plate 135, and the thickness of this engaged portion is thicker than the other portions.

Also, the above-mentioned configuration elements (including the casing 340C) of the suction muffler 340 are molded by using the supercritical foam molding. In particular, the supercritical foam molding which uses core-back is performed on the motor element side 341.

The molding process for the foaming resin which uses the core-back in a supercritical foam molding machine 370 will be described below.

At first, the raw material pellet of the polybutylene telephthalate is thrown into a raw material inserter 371. The thrown into raw material pellet is fused at the temperature of about 250°C or more in a fusion injector 372. On the other hand, the carbon dioxide or nitrogen of the physical foaming agent which becomes at the supercritical state in the supercritical gas generator 374 is injected into the fusion injector 372, and mixed as the high pressure solution with the resin raw material by a screw 375. After that, together with the raw material fused by the screw 375, the foaming agent at the supercritical state is injected into a die unit 377. The processes until this are similar to the second embodiment.

Then, because of the sharp volume change and temperature change which are induced in the passage through the gate at the time of the injection to the cavity inside the die unit 377, the foaming agent at the supercritical state is gasified, thereby generating the bubble. However, it is selected that the thickness of the gate portion is 60% of the wall thickness and that the width is about three times the thickness. The section area is approximately equal to the square of the wall thickness. As compared with the first embodiment, the area becomes wider, such as two times.

Thus, the section area of the gate portion is wider than the second embodiment, and the flow behavior of the resin is excellent. Hence, while the gas pressure of the physical foaming agent is kept high, in the situation that the bubble is small, the fused resin is filled into the cavity.

After that, a part 377a of the die unit is retreated in an arrow direction, and the core-back is executed to enlarge the space of the cavity. Thus, the pressure inside the cavity is dropped, and the bubble is expanded. Hence, the foaming magnification is increased to 30 to 40% that exceeds the supercritical foaming in which the core-back is not used. As a result, the thermal insulating property of the casing 340C of the suction muffler 340 can be further improved, thereby improving the performance.

By the way, the suction muffler 340 is separated and divided in the direction approximately vertical to the wall where the maximum projection area is obtained. Moreover, the direction where at the time of the molding, the part of the die unit is moved to enlarge the cavity is the projection direction where the maximum projection area of the suction muffler 340 is obtained. As a result, enlarging the thickness of the surface having the largest area increases the improvement effect of the thermal insulating performance and the foaming magnification through the core-back, and improves the suck efficiency. Here, the maximum projection area implies the maximum projection area obtained when the projections from various directions are performed on the targeted member.

Also, although the core-back contributes to the improvement of the thermal insulating performance, the application to the complex part into which a pipe and the like are integrated is difficult. However, according to this embodiment, the motor element side 341 close to the compression element 106 and the motor element 105 serving as the heat source is configured such that the relatively simple surface is main and the core-back can be effectively applied, thereby attaining the efficiency improvement. On the other hand, the second linkage path 346 is molded integrally with the anti-motor element side 342 on the opposite side. Consequently, the number of the parts is reduced to reduce the cost.

In the case of using the supercritical foaming technique, the drop in the strength caused by the foaming is low as compared with the conventional foaming technique. However, as the foaming magnification is higher, the strength is further dropped. Incidentally, since the suction muffler 340 is fixed, in the portion interposed between the valve plate 135 and the cylinder head 136, by making the plate thickness relatively thicker, the strength can be reserved, thereby protecting the occurrence of the abnormal tone caused by the vibration of the suction muffler 340 and the leakage of the gas.

### (Fourth Embodiment)

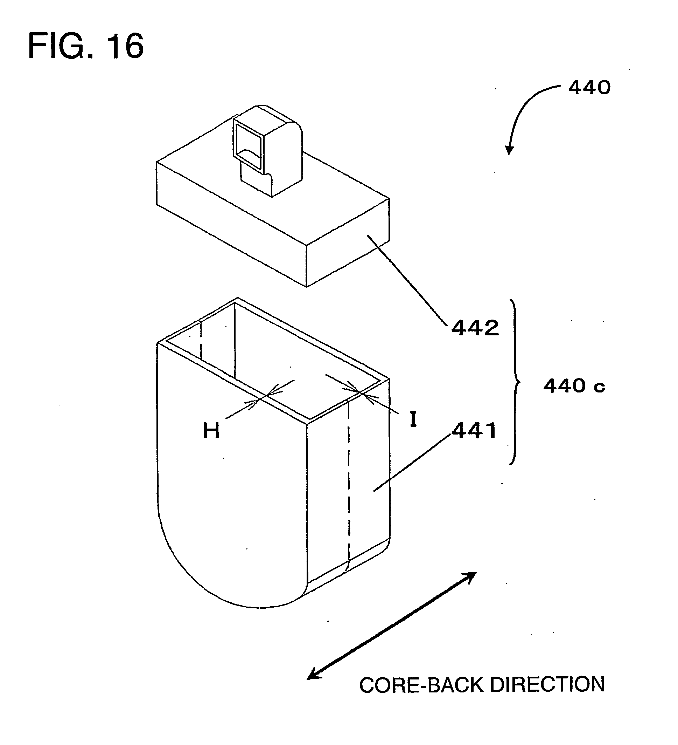

Fig. 16 is a decomposition view of a suction muffler of a hermetic compressor in the fourth embodiment of the present invention. By the way, the configuration of the hermetic compressor in this embodiment is the same configuration as the third embodiment except the suction muffler, and the method of the supercritical foam molding is also similar. Thus, the explanation is omitted.

In Fig. 16, a casing 440C of a suction muffler 440 is constituted by two parts of a suction muffler body 441 and a suction muffler cover 442 and assembled by a method of welding and the like. Also, since the suction muffler cover 442 is interposed between the cylinder head 136 and the valve plate 135, the suction muffler 440 is fixed.

The suction muffler cover 442 has the sufficient strength, because the foam molding is not executed. Thus, it is possible to protect the occurrence of the abnormal tone caused by the vibration of the suction muffler 440 and the leakage of the gas.

On the other hand, the suction muffler body 441 is manufactured by the supercritical foam molding, similarly to the third embodiment. Moreover, the core-back is carried out in the projection direction where the maximum projection area is obtained as shown by an arrow of Fig. 16. Consequently, a plate thickness H of the wall, which occupies most of the surface area of the casing 440C of the suction muffler 440 and is close to the motor element 105 of the high temperature and the like, is made thicker than a plate thickness I of the other walls, and the foaming magnification is made higher. Thus, the thermal insulating performance of the whole of the suction muffler 440 is improved, thereby improving the suck efficiency.

### INDUSTRIAL APPLICABILITY

As mentioned above, the hermetic compressor according to the present invention and the manufacturing method of the suction muffler can make the suck efficiency higher and also reduce the noise vibration. Thus, they can be applied to the usage field, such as the air condition, the freezing refrigerating apparatus or the like.

## Claims

1. A hermetic compressor including: a motor element (105) within a hermetic vessel (101); a compression element (106) driven by said motor element; and a suction muffler (140, 240, 340, 440) made of synthetic resin which is linked to said compression element, **characterized in that** at least a part of a casing of said suction muffler is foam-molded and **in that** a skin layer (151) in which a bubble does not exist substantially is formed on a surface of said foam-molding.

2. The hermetic compressor according to claim 1, wherein a bubble diameter obtained by said foam-molding is 50µm or less.

3. The hermetic compressor according to claim 1, wherein a material of said foam-molding is crystal synthetic resin.

4. The hermetic compressor according to claim 1, 2 or 3, wherein a thickness of said skin layer is 30% or less of a plate thickness in the thinnest portion.

5. The hermetic compressor according to claim 1, wherein a foaming magnification of said foam-molding is 1.2 times or more.

6. The hermetic compressor according to claim 1, wherein among a plurality of walls constituting said casing, a plate thickness of the wall in which the maximum projection area is obtained is thicker than plate thicknesses of the other plate thicknesses.

7. The hermetic compressor according to claim 1, wherein said casing is produced by combining at least two parts (441, 442), and said two parts are separated and divided in a direction substantially vertical to the wall in which the maximum projection area of said casing is obtained.

8. The hermetic compressor according to claim 1, wherein plate thicknesses of a corner of said casing and a portion having a high curvature are relatively larger than the other portions.

9. The hermetic compressor according to claim 1, wherein said suction muffler includes a sound attenuation space (347) formed inside said casing, a first linkage path (345) to link said compression element and said sound attenuation space, and a second linkage path (346) to link an inner portion of said hermetic vessel and said sound attenuation space, and
wherein a wall of said casing, which is close to at least one of said motor-element, said compression element, an open end within said sound attenuation space of said first linkage path, and an open end within said sound attenuation space of said second linkage path is designed so as to have at least one of a configuration that it is thicker than the other walls of said casing and a configuration that it is higher in foaming magnification.

10. The hermetic compressor according to claim 1, wherein a lubricating oil is stored in said hermetic vessel, and at least one of walls of said casing of said suction muffler to which said lubricating oil is supplied is designed so as to have at least one of a configuration that it is thicker than the other walls of said casing and a configuration that it is higher in foaming magnification.

11. The hermetic compressor according to claim 1, wherein the casing of said suction muffler has a suction muffler body (441) and a suction muffler cover (442), and wherein a bonding portion between said suction muffler body and said suction muffler cover has a foaming magnification which is relatively lower as compared with portions except said-bonding portion, or it is not foam-molded.

12. The hermetic compressor according to claim 1, wherein the linkage path to link the inner portion of said hermetic vessel and the sound attenuation space of said suction muffler is formed integrally with the farthest element from the motor element, among a plurality of elements constituting the casing of said suction muffler.

13. The hermetic compressor according to claim 1, wherein a part of the casing of said suction muffler is interposed between a cylinder head (136) and a valve plate (135) which constitute said compression element, and said interposed part of said casing has a relatively low foaming magnification or it is not foam-molded.

14. The hermetic compressor according to claim 1, wherein a part of the casing of said suction muffler is interposed between a cylinder head (136) and a valve plate (135)which constitute said compression element, and the thickness of said interposed part of said casing is thicker than the other portions.

15. The hermetic compressor according to claim 1, wherein said motor element is inverter-driven at a rotation number including a rotation number less than a commercial power supply frequency.

16. The hermetic compressor according to claim 16, wherein said rotation number is 20r/sec or less.

17. The hermetic compressor according to claim 1, wherein a refrigerant gas compressed by said compression element is R600a.

## Patentansprüche

1. Hermetischer Kompressor mit: einem Motorelement (105) in einem hermetischen Behälter (101); einem Kompressionselement (106), das durch das Motorelement betrieben ist; und einem Saugschalldämpfer (140, 240, 340, 440), der aus Kunstharz besteht und an das Kompressionselement angebunden ist, **dadurch gekennzeichnet, dass** zumindest ein Teil eines Gehäuses des Saugschalldämpfers schaumgeformt ist, und dass eine Hautschicht (151), in der keine Blase vorhanden ist, im Wesentlichen auf einer Oberfläche des Schaumformstücks ausgebildet ist.

2. Hermetischer Kompressor nach Anspruch 1, wobei ein Blasendurchmesser, der durch das Schaumformen erhalten wird, 50 µm oder kleiner ist.

3. Hermetischer Kompressor nach Anspruch 1, wobei ein Material des Schaumformstücks kristalliner Kunstharz ist.

4. Hermetischer Kompressor nach einem der Ansprüche 1, 2 oder 3, wobei eine Dicke der Hautschicht 30 % oder weniger einer Plattendicke in dem dünnsten Abschnitt beträgt.

5. Hermetischer Kompressor nach Anspruch 1, wobei eine Schäumungsvergrößerung des Schaumformstücks das 1,2-fache oder mehr beträgt.

6. Hermetischer Kompressor nach Anspruch 1, wobei unter mehreren Wänden, die das Gehäuse bilden, eine Plattendicke der Wand, in der der maximale Vorsprungsbereich erhalten wird, dicker als Plattendicken der anderen Plattendicken sind.

7. Hermetischer Kompressor nach Anspruch 1, wobei das Gehäuse dadurch hergestellt wird, dass zumindest zwei Teile (441, 442) kombiniert werden und die beiden Teile in einer Richtung im Wesentlichen vertikal zu der Wand getrennt und geteilt werden, in der der maximale Vorsprungsbereich des Gehäuses erhalten wird.

8. Hermetischer Kompressor nach Anspruch 1, wobei Plattendicken einer Ecke des Gehäuses und eines Abschnittes, der eine hohe Krümmung besitzt, relativ größer als die der anderen Abschnitte sind.

9. Hermetischer Kompressor nach Anspruch 1, wobei der Saugschalldämpfer umfasst: einen Geräuschdämpfungsraum (347), der in dem Gehäuse ausgebildet ist, einen ersten Anbindungspfad (345), um das Kompressionselement an den Geräuschdämpfungsraum anzubinden, und einen zweiten Anbindungspfad (346), um einen inneren Abschnitt des hermetischen Behälters an den Geräuschdämpfungsraum anzubinden, und
wobei eine Wand des Gehäuses, die sich nahe zumindest einem des Motorelements, des Kompressionselements, eines offenen Endes in dem Geräuschdämpfungsraum des ersten Anbindungspfades und eines offenen Endes in dem Geräuschdämpfungsraum des zweiten Anbindungspfades befindet, so ausgebildet ist, dass zumindest eine einer Konfiguration, die dicker als die anderen Wände des Gehäuses ist, und einer Konfiguration erhalten wird, die eine größere Schäumungsvergrößerung besitzt.

10. Hermetischer Kompressor nach Anspruch 1, wobei ein Schmieröl in dem hermetischen Behälter gespeichert ist, und zumindest eine der Wände des Gehäuses des Saugschalldämpfers, an die das Schmieröl geliefert wird, so ausgebildet ist, dass zumindest eine einer Konfiguration, die dicker als die anderen Wände des Gehäuses ist, und einer Konfiguration erhalten wird, die eine größere Schäumungsvergrößerung besitzt.

11. Hermetischer Kompressor nach Anspruch 1, wobei das Gehäuse des Saugschalldämpfers einen Saugschalldämpferkörper (441) und eine Saugschalldämpferabdeckung (442) aufweist, und wobei ein Anbindungsabschnitt zwischen dem Saugschalldämpferkörper und der Saugschalldämpferabdeckung eine Schäumungsvergrößerung besitzt, die im Vergleich zu Abschnitten außer des Anbindungsabschnitts relativ geringer ist, oder nicht schaumgeformt ist.

12. Hermetischer Kompressor nach Anspruch 1, wobei der Anbindungspfad, um den inneren Abschnitt des hermetischen Behälters an den Geräuschdämpfungsraum des Saugschalldämpfers anzubinden, einteilig mit dem von dem Motorelement am weitesten entfernten Element unter einer Vielzahl von Elementen, die das Gehäuse des Saugschalldämpfers bilden, ausgebildet ist.

13. Hermetischer Kompressor nach Anspruch 1, wobei ein Teil des Gehäuses des Saugschalldämpfers zwischen einem Zylinderkopf (136) und einer Ventilplatte (135) angeordnet ist, die das Kompressionselement bildet, und das dazwischen angeordnete Teil des Gehäuses eine relativ geringe Schäumungsvergrößerung besitzt, oder nicht schaumgeformt ist.

14. Hermetischer Kompressor nach Anspruch 1, wobei ein Teil des Gehäuses des Saugschalldämpfers zwischen einem Zylinderkopf (136) und einer Ventilplatte (135) angeordnet ist, die das Kompressionselement bildet, und die Dicke des dazwischen angeordneten Teils des Gehäuses dicker als die der anderen Abschnitte ist.

15. Hermetischer Kompressor nach Anspruch 1, wobei das Motorelement mit einer Drehzahl wechselrichterbetrieben wird, die eine Drehzahl aufweist, die kleiner als eine kommerzielle Energieversorgungsfrequenz ist.

16. Hermetischer Kompressor nach Anspruch 16, wobei die Drehzahl 20 U / s oder kleiner ist.

17. Hermetischer Kompressor nach Anspruch 1, wobei ein Kühlmittelgas, das durch das Kompressionselement komprimiert wird, R600a ist.

## Revendications

1. Compresseur hermétique comprenant : un élément moteur (105) dans une cuve hermétique (101) ; un élément de compression (106) entraîné par ledit élément moteur ; et un silencieux d'aspiration (140, 240, 340, 440) fait de résine synthétique qui est relié audit élément de compression, **caractérisé en ce que** au moins une partie d'un boîtier dudit silencieux d'aspiration est moulé en mousse et **en ce qu'**une couche de revêtement (151) dans laquelle une bulle n'existe pas sensiblement est formé sur une surface dudit moulage de mousse.

2. Compresseur hermétique selon la revendication 1, dans lequel un diamètre de bulle obtenu au moyen dudit moulage de mousse est de 50 µm ou inférieur.

3. Compresseur hermétique selon la revendication 1, dans lequel un matériau dudit moulage de mousse est une résine de cristal synthétique.

4. Compresseur hermétique selon la revendication 1, 2 ou 3, dans lequel une épaisseur de ladite couche de revêtement est de 30% ou inférieure d'une épaisseur de plaque dans la partie la plus mince.

5. Compresseur hermétique selon la revendication 1, dans lequel un agrandissement du moussage dudit moulage de mousse est de 1,2 fois ou supérieur.

6. Compresseur hermétique selon la revendication 1, dans lequel parmi une pluralité de parois constituant ledit boîtier, une épaisseur de plaque de la paroi dans laquelle l'aire de projection maximum est obtenue est plus épaisse que les épaisseurs de plaque des autres épaisseurs de plaque.

7. Compresseur hermétique selon la revendication 1, dans lequel ledit boîtier est produit au moyen de la combinaison d'au moins deux parties (441, 442), et lesdites deux parties sont séparées et divisées dans une direction sensiblement verticale à la paroi dans laquelle l'aire de projection maximum dudit boîtier est obtenue.

8. Compresseur hermétique selon la revendication 1, dans lequel les épaisseurs de plaque d'un coin dudit boîtier et une partie ayant une courbure élevée sont relativement plus grands que les autres parties.

9. Compresseur hermétique selon la revendication 1, dans lequel ledit silencieux d'aspiration comprend un espace d'atténuation de son (347) formé à l'intérieur dudit boîtier, un premier chemin de liaison (345) pour lier ledit élément de compression et ledit espace d'atténuation de son, et un deuxième chemin de liaison (346) pour lier une partie intérieure de ladite cuve hermétique et dudit espace d'atténuation de son, et
dans lequel une paroi dudit boîtier, qui est proche ou d'au moins un dudit élément moteur, dudit élément de compression, d'une extrémité ouverte dans ledit espace d'atténuation de son dudit premier chemin de liaison, et d'une extrémité ouverte dudit espace d'atténuation de son dudit deuxième chemin de liaison est conçue de façon à avoir au moins une d'une configuration qui est plus épaisse que les autres parois dudit boîtier et une configuration qui est plus élevée en agrandissement de moulage de mousse.

10. Compresseur hermétique selon la revendication 1, dans lequel une huile de lubrification est stockée dans ladite cuve hermétique, et au moins une des parois dudit silencieux d'aspiration auquel ladite huile de lubrification est procurée est conçue de façon à avoir au moins une d'une configuration qui est plus épaisse que les autres parois dudit boîtier et une configuration qui est plus élevée en agrandissement de moulage de mousse.

11. Compresseur hermétique selon la revendication 1, dans lequel le boîtier dudit silencieux d'aspiration a un corps de silencieux d'aspiration (441) et un capot de silencieux d'aspiration (442), et dans lequel une partie de liaison entre ledit corps de silencieux d'aspiration et ledit capot de silencieux d'aspiration a un agrandissement de moussage de mousse qui est relativement plus faible en comparaison avec les parties à l'exception de ladite partie de liaison, ou elle n'est pas moulée en mousse.

12. Compresseur hermétique selon la revendication 1, dans lequel le chemin de liaison pour lier la partie intérieure de ladite cuve hermétique et l'espace d'atténuation de son dudit silencieux d'aspiration est formé intégralement avec l'élément le plus éloigné de l'élément moteur, parmi une pluralité d'éléments constituant le boîtier dudit silencieux d'aspiration.

13. Compresseur hermétique selon la revendication 1, dans lequel une partie du boîtier dudit silencieux d'aspiration est interposé entre une tête de cylindre (136) et une plaque porte soupape (135) qui constitue ledit élément de compression, et ladite partie interposée dudit boîtier a un agrandissement de moussage relativement faible ou elle n'est pas moulée en mousse.

14. Compresseur hermétique selon la revendication 1, dans lequel une partie du boîtier dudit silencieux d'aspiration est interposé entre une tête de cylindre (136) et une plaque porte soupape (135) qui constitue ledit élément de compression, et l'épaisseur de ladite partie interposée dudit boîtier est plus épaisse que les autres parties.

15. Compresseur hermétique selon la revendication 1, dans lequel ledit élément moteur est entraîné en mode inverse à un nombre de rotations comprenant un nombre de rotations inférieur à une fréquence d'alimentation électrique commerciale.

16. Compresseur hermétique selon la revendication 16, dans lequel ledit nombre de rotation est de 20 r/seconde ou inférieur.

17. Compresseur hermétique selon la revendication 1, dans lequel un gaz réfrigérant compressé au moyen dudit élément de compression est le R600a.
